# EUROPEAN PATENT APPLICATION

(11) **EP 4 806 721 A1**
(43) Date of publication of application: **16.09.2026**
(21) Application number: 26164447.0
(22) Date of filing: 12.03.2026
(51) Int. Cl.: B60N 2/50, B60G 17/02, B60N 2/52, B60N 2/54, B61D 33/00, F16F 1/04, F16F 15/02, F16F 15/04, F16F 15/023, F16F 15/067

(54) **SHOCK ABSORBING DEVICE FOR A SEAT**

(30) Priority: 14.03.2025 IT 202500005212
(71) Applicant: F.I.S.A - Fabbrica Italiana Sedili Autoferroviari - SRL, 33010 Rivoli di Osoppo (Udine) (IT)
(72) Inventor: De Simon, Davide, 33100 Udine (IT); Clemente, Luca, 33017 Tarcento (Ud) (IT); Capaccioli, Francesco Maria, 33100 Udine (IT)
(74) Representative: Petraz, Gilberto Luigi

(57) **Abstract**

Shock absorbing device (10) for a seat (51) installed on a vehicle and comprising at least a first telescopic element (11) connected to the seat (51), a second telescopic element (12) connected to the vehicle and configured to slide axially with respect to the first (11), and an elastic unit (13) disposed between the first telescopic element (11) and the second telescopic element (12), and configured to define a reciprocal elastic sliding between the first telescopic element (11) and the second telescopic element (12); the elastic unit (13) comprises at least a first portion (P1) having a first elastic coefficient (k1) and at least a second portion (P2) disposed in functional continuity with the first portion (P1) and having a second elastic coefficient (k2) different from the first elastic coefficient (k1).

## Description

### FIELD OF THE INVENTION

The present invention concerns a shock absorbing device for a seat, in particular a professional type of seat used, for example, by train drivers, helmsmen, or those in control of motor vehicles more generally, but also for office or other uses. In particular, the shock absorbing device according to the present invention is applied to vertically spring the seat during use, in order to absorb any vertical stresses, preventing them from impacting the user's musculoskeletal system.

The present invention also concerns the seat and, more generally, a chair to which the shock absorbing device is applied.

### BACKGROUND OF THE INVENTION

In general, professional type chairs are known, that is, chairs used to provide a user, for example a driver, with a comfortable and ergonomic working position. It is also known that chairs can consist, in basic form, of a simple seat on which the user sits, or, in a more complete form, of the seat joined to a support backrest. From here, also depending on the different regulations that govern the safety and health of operators in different professional tasks, the chair can provide armrests, headrests, various ergonomic adjustments, and more.

In some professional sectors, particularly, but not only, those in which the driving, or in any case the presence on board, of a vehicle is required, such as for example in the railway, naval, trucking, or similar sector, it is known to provide a cushioned seat, that is, capable of minimizing the transmission of any vertical stresses or vibrations generated by the vehicle to the user.

In this regard, shock absorbing devices directly associated with the lower part of the seat and the internal flooring of the vehicle are known, conformed to absorb a good part of the vertical stresses, damping their direct transmission to the user and reducing the effects of both muscle fatigue and also occupational injuries of varying severity.

Different solutions of shock absorbing devices are known, both of the mechanical and pneumatic type, or mixed, which, however, each have different disadvantages both in terms of construction and operation.

In known mechanical solutions, the shock absorbing device substantially provides a helical spring disposed with its compression axis in a substantially vertical direction in correspondence with the mechanical center of the seat. The helical spring, due to its mechanical conformation, has a certain elasticity coefficient that allows to absorb both the weight of the user sitting on the seat, and also the vibrations and stresses generated by the vehicle.

In order to optimize the absorption of desired ranges of stress frequencies, also as a function of the actual weight of the user, known shock absorbing devices provide adjustment members, on which the user can act directly, by means of which it is possible to adjust a preload of the helical spring, as a function of the weight applied on the seat.

In these solutions, since it is the operator who acts directly on the adjustment members to selectively vary the spring's preload, adjustment errors or omissions can occur, leading to insufficient or failed absorption of the vibrations, resulting in user muscle fatigue, even causing professional injuries, whether short or long term.

In known pneumatic solutions, but also in mixed mechanical/pneumatic ones, instead of, or in cooperation with, the helical spring, a pneumatic system is provided that, on the one hand, progressively absorbs the user's weight and, on the other hand, dampens the stresses generated by the vehicle. In known pneumatic solutions, the pneumatic system can be adjusted by means of a specific control circuit in order to define a substantially automatic, or semi-automatic, adjustment member for adjusting the working intensity of the actuator itself.

This type of known solution, in addition to having high construction costs due to the pneumatic components provided to adjust the working intensity of the actuator, needs to be installed on vehicles in which there is a pneumatic circuit, or in any case a pneumatic circuit is installable, provided with a compressor and anything else.

This requirement limits the types of vehicles on which the pneumatic shock absorbing device can be installed and consequently the potential market spread.

Shock absorbing devices, such as those disclosed in documents DE 10 2022 117466 A1 and DE 93 13 630 U1, are also known to the state of the art. In particular, document DE'466 discloses a shock absorber equipped with a spring with progressive stiffness coupled to a damping element. However, these known solutions do not allow to simultaneously optimize the axial compactness of the device and the passive management of eccentric loads and torsional instabilities, while maintaining an effective absorption of vibrations over wide frequency spectra regardless of the user's weight.

There is therefore the need to perfect a shock absorbing device for a seat, advantageously of the professional type, that can overcome at least one of the disadvantages of the state of the art.

To achieve this, it is necessary to solve the technical problem of sufficiently absorbing the vibrations and stresses generated by the vehicle independently of the user's weight.

In particular, one purpose of the present invention is to provide a shock absorbing device for a seat that allows for a substantial self-adjustment of the shock absorbing intensity, as a function of the user's weight.

Another purpose of the present invention is to provide a shock absorbing device that is simple and economical to manufacture, and does not require the provision of systems, circuits, or other accessories on the vehicle where the seat is installed.

A further purpose of the present invention is to provide a shock absorbing device that allows to eliminate the selective and/or manual adjustment of the shock absorbing functions by the user.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to solve the technical problem described above in a new and original way, also achieving considerable advantages compared to the state of the prior art, a shock absorbing device according to the present invention is applied to cushion a seat of a vehicle, particularly but not exclusively of the professional type used, for example, in railway or naval means of transport, motor vehicles such as buses or lorries, but also for office use or other.

The shock absorbing device according to the present invention comprises at least a first telescopic element connected to the seat, and a second telescopic element which is connected to the vehicle, in particular to a rest plane thereof, and is configured to slide axially with respect to the first telescopic element so as to define both a desired height of the seat from the vehicle's rest plane and also a possible adjustment of such height, as a result of the relative sliding between the two elements.

Here and hereafter in the description and claims, we will refer primarily to a "classic" telescopic coupling between the two elements, first and second, understood as having a tubular conformation and being coordinated in size, which slide reciprocally in a substantially coaxial condition. However, the solution according to the present invention also finds effective application in telescopic couplings understood in more general terms, namely, as a constrained reciprocal sliding between the two elements, to selectively vary the overall longitudinal size defined between the two.

The shock absorbing device according to the present invention further comprises elastic means disposed between the first telescopic element and the second telescopic element, and which are configured to define a reciprocal elastic sliding therebetween.

In this way, the elastic means are functionally configured to effectively absorb at least a certain portion of the vertical stresses generated by the vehicle, reducing their direct transmission to the user, thus advantageously reducing the effects of both muscle fatigue and also occupational injuries of varying severity.

In accordance with one aspect of the present invention, the elastic means comprise at least a first portion having a first elastic coefficient and at least a second portion disposed in functional continuity with the first portion and having a second elastic coefficient different from the first elastic coefficient.

This difference in elastic coefficients between the two portions of the elastic means allows for a different and progressive elastic response when the elastic means are subjected to certain stresses, such as for example the weight of the user sitting on the seat. In fact, as a function of the applied weight, the two portions of the elastic means release different elastic responses, as a function of the corresponding elastic coefficients, providing, overall, an elastic response that is always different and correlated to the actual load applied, as well as the vibration stresses and other, generated by the vehicle's movement.

In other words, the shock absorbing device for a seat according to the present invention allows for a substantial self-adjustment of the cushioning intensity, as a function of the user's weight.

This substantial self-adjustment, achieved by the solution according to the present invention, allows to eliminate from the seat the requirement to provide a manual selective adjustment, while still guaranteeing, under all conditions, sufficient absorption of any vibrations and stresses generated by the vehicle, regardless of the weight, skill, or will of the user making the adjustments.

Furthermore, since the elastic means are unconstrained from any external feeds, such as fluid-dynamic systems or circuits, the shock absorbing device according to the present invention is simple and economical to manufacture and does not require the provision of systems or other accessories on the vehicle in which the seat is installed, thus finding wide use on the market, even for installation on existing vehicles.

In accordance with another aspect of the present invention, the elastic means also comprise a third portion, which is disposed in continuity with the second portion and has a third elastic coefficient, different from both the first elastic coefficient and also the second elastic coefficient.

In this way, the range of weights applicable to the seat with which the shock absorbing device according to the present invention is associated is substantially expanded, since the third elastic coefficient allows for greater solutions of differentiated elastic response correlated to the actual load applied.

In accordance with some advantageous embodiments, the first elastic coefficient has a lower absolute value than the second elastic coefficient, which in turn has a lower absolute value than the third elastic coefficient.

This results in a progressive elastic response, as a function of the applied load, in which the three portions of the elastic means give different and progressive elastic responses to compensate for the applied weight, while still guaranteeing effective vibration absorption.

The Applicant has found that the solution according to the present invention in fact guarantees a high level of damping of the vibrations transmitted from the vehicle to the seat, damping them by approximately 60%.

In accordance with another aspect of the present invention, the elastic means comprise at least one helical spring, or another type of mechanical spring. Other solutions in which the elastic means can provide elastomeric layers, or mixed solutions of elastomers and mechanical springs, whether helical or of other types, are however not excluded.

In preferential solutions with helical spring, the solution according to the present invention can provide that the first portion is defined by a specific number of first turns comprised between approximately 1 and approximately 5, spaced apart in the direction of the reaction at a certain first pitch comprised between approximately 9 mm and approximately 30 mm, so as to have a first elastic coefficient comprised between approximately 5 N/mm and approximately 7 N/mm.

In the same way, the second portion can provide a number of second turns comprised between approximately 3 and approximately 8, spaced apart at a certain second pitch comprised between approximately 25 mm and approximately 35 mm, and with a second elastic coefficient comprised between approximately 7.5 N/mm and approximately 15 N/mm.

In some embodiments, combinable with all the embodiments described here, the elastic means comprise at least one helical spring having a second elastic coefficient different from the first elastic coefficient.

In some embodiments, combinable with all the embodiments described here, the elastic means comprise a central gas spring disposed coaxial with a damping axis, and a damping member provided with at least one viscous dissipator and limited in its stroke by a mechanical governor, wherein the viscous dissipator and the mechanical governor are disposed laterally and substantially parallel with respect to the central gas spring.

In some embodiments, combinable with all the embodiments described here, the first elastic coefficient is comprised between approximately 5 N/mm and approximately 7 N/mm, and the second elastic coefficient is comprised between approximately 7.5 N/mm and approximately 15 N/mm.

In accordance with some embodiments, the elastic means comprise at least one helical spring having at least a first portion with a first elastic coefficient comprised between approximately 5 N/mm and approximately 7 N/mm, and at least a second portion disposed in functional continuity with the first portion and having a second elastic coefficient comprised between approximately 7.5 N/mm and approximately 15 N/mm.

Advantageously, to guarantee a stable response, dampen harmonic inertia, and have a compact overall footprint, the elastic means comprise a central gas spring disposed coaxial with the damping axis, and a damping member provided with at least one viscous dissipator and a mechanical stroke limiter. In particular, the viscous dissipator and the stroke limiter are disposed laterally and substantially parallel with respect to the central gas spring.

In some embodiments, combinable with all the embodiments described here, the central gas spring is constrained, on the side of a stem thereof, to an anchoring wall of the first telescopic element and, on the side of a cylinder thereof, to a slider plate.

In some embodiments, combinable with all the embodiments described here, the first portion comprises a number of first turns comprised between approximately 1 and approximately 5 at a first pitch comprised between approximately 9 mm and approximately 30 mm, and the second portion comprises a number of second turns comprised between approximately 3 and approximately 8 at a second pitch comprised between approximately 25 mm and approximately 35 mm.

In some embodiments, combinable with all the embodiments described here, the helical spring comprises a third portion disposed in functional continuity with the second portion and having a third elastic coefficient different from both the first elastic coefficient and also the second elastic coefficient.

In some embodiments, combinable with all the embodiments described here, the third elastic coefficient is comprised between approximately 10 N/mm and approximately 40 N/mm.

In some embodiments, combinable with all the embodiments described here, the third portion comprises a number of third turns comprised between approximately 1 and approximately 5 at a third pitch comprised between approximately 30 mm and approximately 70 mm.

In the advantageous solutions with the third portion, the latter can provide a number of third turns comprised between approximately 1 and approximately 5, spaced apart at a third pitch comprised between approximately 30 mm and approximately 70 mm, and with an elastic coefficient comprised between approximately 10 N/mm and approximately 40 N/mm.

In some embodiments, combinable with all the embodiments described here, the first elastic coefficient has a lower absolute value than the second elastic coefficient, and the second elastic coefficient has a lower absolute value than the third elastic coefficient.

In accordance with another advantageous aspect of the solution according to the present invention, the elastic means further comprise a damping member, which is provided with at least one viscous dissipator, which defines the assembly of the helical spring both with the first telescopic element and also with the second telescopic element. The at least one dissipator is configured to dampen the elastic action of the helical spring and, consequently, the reciprocal elastic sliding between the first telescopic element and the second telescopic element, in order to contain the effect of the harmonic inertia of the helical spring and prevent any divergent unstable behavior.

In some advantageous preferential embodiments, the damping member comprises at least one positioning plate with which the helical spring cooperates, which plate is configured to be selectively adjusted in height with respect to the second telescopic element, for example by means of a screw system. In this way, a preload can be set for the helical spring. This preload has the main function of keeping the helical spring within desired elastic operating parameters, possibly modifiable over time as a function of wear, changes in the required absorption parameters, or other requirements.

In some embodiments, combinable with all the embodiments described here, the viscous dissipator and the mechanical governor are constrained, on the side of a stem thereof, to the slider plate and, on the side of a cylinder thereof, to a base plate of the second telescopic element.

### DESCRIPTION OF THE DRAWINGS

These and other aspects, characteristics and advantages of the present invention will become apparent from the following description of an embodiment, given as a non-restrictive example with reference to the attached drawings wherein:

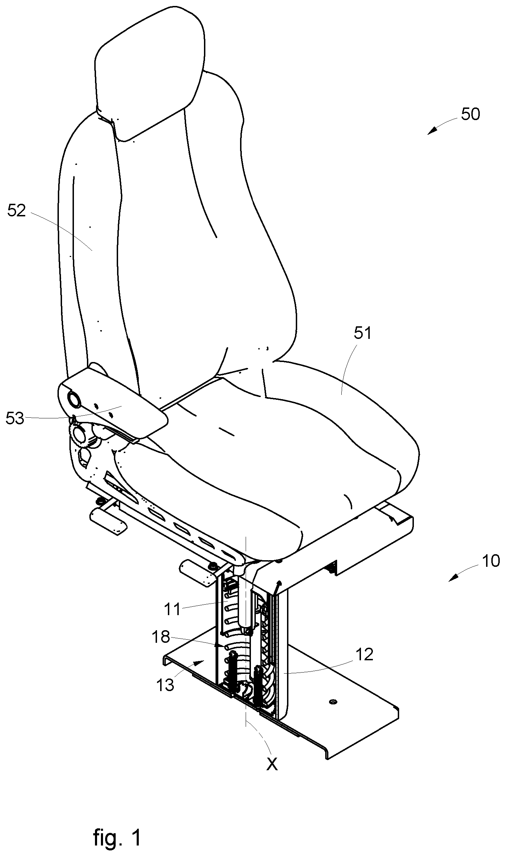

- fig. 1 shows a schematic, partly sectioned, three-dimensional view of a vehicle seat to which a shock absorbing device according to the present invention is applied;
- fig. 2 shows a schematic section view of an enlarged detail of fig. 1;
- figs. 3a, 3b, and 3c schematically show three distinct load conditions of the shock absorbing device of fig. 1;
- fig. 4 schematically shows a load diagram of the helical spring used in the shock absorbing device of fig. 1.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

With reference to the attached drawings, a shock absorbing device 10 according to the embodiments described here is applied to a seat 51 of a professional chair 50, in this specific case represented as a chair 50 for driving a railway vehicle, of a substantially known type and not shown. The chair 50 also comprises a backrest 52 and an armrest 53, to improve the ergonomic working conditions of the user, hereafter also referred to as the driver.

The device 10 according to embodiments described here substantially comprises a first telescopic element, or upper element 11, attached to the lower part of the seat 51, a second telescopic element, or lower element 12, attached to the vehicle (not shown), and elastic means, or elastic unit 13, interposed between the upper element 11 and the lower element 12 in order to condition their reciprocal movement in a cushioned manner.

In particular, the upper element 11 comprises an anchoring wall 14 directly attached to the bottom of the seat 51, for example by means of screws or other known systems, not shown in detail, and a central body 15 with a cylindrical tubular shape, which extends in a substantially vertical direction from the anchoring wall 14, defining a damping axis X, also substantially vertical.

The lower element 12 comprises a base wall 16 directly attached to a floor of the vehicle, for example by means of screws or other known systems, not shown in detail, and a central body 17, also with a cylindrical tubular shape but with a larger diametric size coordinated with the central body 15 of the upper part 11. The central body 17 of the lower part 12, similarly to the central body 15 of the upper part 11, extends in a substantially vertical direction from the base wall 16, in a condition coaxial with the damping axis X.

In this way, the two central bodies 15 and 17 can slide coaxially, both with respect to each other and also with respect to the damping axis X, thus allowing to selectively vary the height H defined between the anchoring wall 14 and the base wall 16.

The elastic unit 13 comprises, primarily, an elastic spring 18, kinematically connected to the upper part 11 and to the lower part 12, as will be explained in more detail below. The elastic spring 18 is conformed so as to define, in functional continuity with each other, from top to bottom in the attached drawings, a first portion P1 having a first elastic coefficient, a second portion P2 having a second elastic coefficient and a third portion P3 having a third elastic coefficient. Advantageously, the three elastic coefficients are different from each other, and each has an absolute value progressively lower than the next, that is, the first elastic coefficient has a lower value than the second, which in turn has a lower value than the third.

In some preferred embodiments, the first portion P1 is made so as to define a first elastic coefficient k1 comprised between approximately 5 N/mm and approximately 8 N/mm; the second portion P2 is made with a second elastic coefficient k2 comprised between approximately 7.5 N/mm and approximately 15 N/mm; while the third portion P3, which is the stiffest, is made with a third elastic coefficient k3 comprised between approximately 10 N/mm and approximately 40 N/mm.

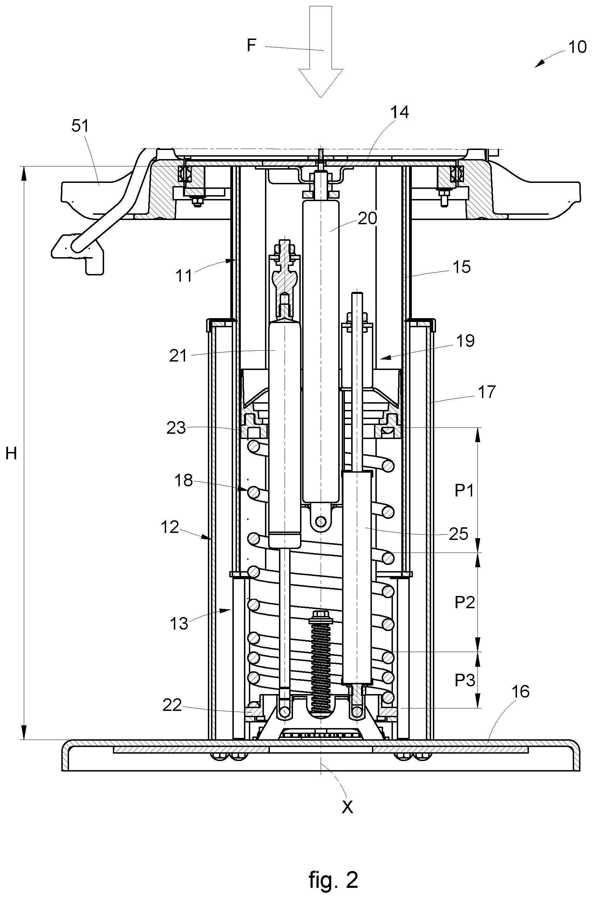

In this way, depending on the load value of a pressure, generally indicated with the reference letter F in fig. 2, applied to the seat 51, the three portions P1, P2 and P3 of the helical spring 18 generate an elastic response proportional to the corresponding elastic coefficients k1, k2 and k3, progressively deforming from the most to the least rigid, so as to determine a coordinated variation of the height H, precisely as a function of the modular value of the applied pressure F.

As can be seen in the sequence of figs. from 3a to 3b, three different and progressive loading conditions are represented, in which a first pressure F1, a second pressure F2 and a third pressure F3 are applied to the seat 51, one progressively greater than the other.

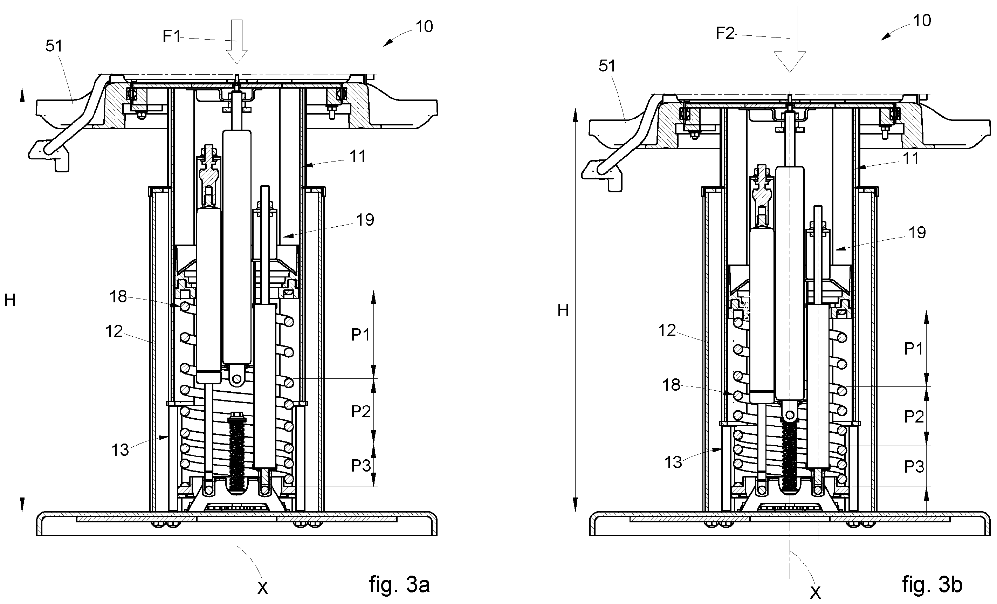

By way of a non-limiting example, with the solution described and represented, it is possible that by applying a pressure F1 of the value of the order of one hundred kg (fig. 3a), the height H is reduced by approximately 100-150 mm, and the cooperative combination of the three portions P1, P2 and P3 applies an overall elastic coefficient comprised between approximately 4 N/mm and approximately 10 N/mm, advantageously approximately 7 or 8 N/mm.

In the same solution, by applying a pressure F2 of a value greater than one hundred kg (fig. 3b), the height H is reduced by approximately 150-180 mm, and the cooperative combination of the three portions P1, P2 and P3 applies an overall elastic coefficient comprised between approximately 6 N/mm and approximately 14 N/mm, advantageously approximately 9 or 10 N/mm.

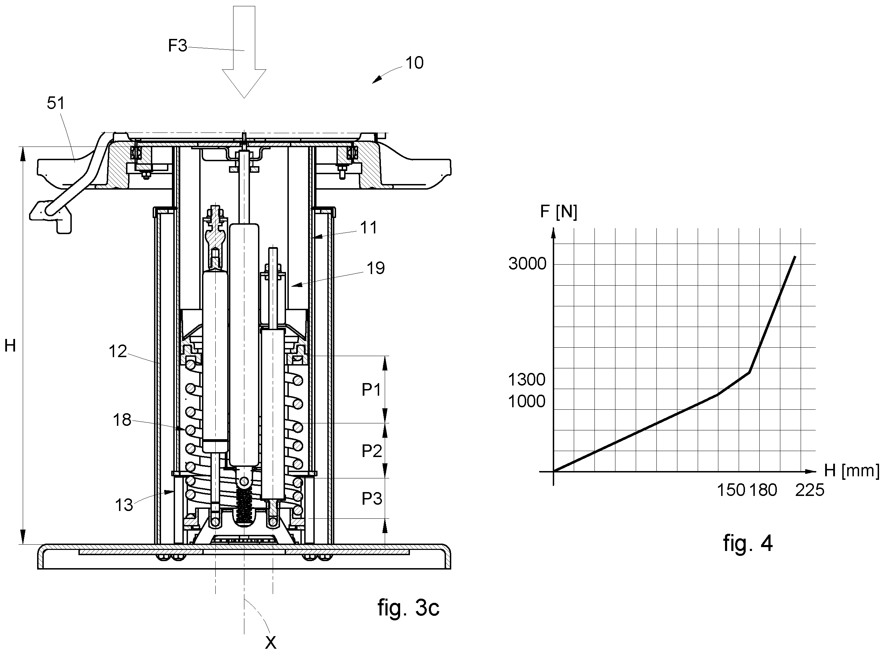

With reference to fig. 3c, in the same embodiment condition, by applying a pressure F3 of a value of a few hundred kg, the height H is reduced by approximately 180-225 mm, and the cooperative combination of the three portions P1, P2 and P3 applies an overall elastic coefficient comprised between approximately 30 N/mm and approximately 50 N/mm, advantageously approximately 36-37 N/mm.

The progression in value of the overall elastic coefficient described here is graphically represented in fig. 4, in which the three distinct segments of the resultant of the ratio between the applied pressure F and the correlated reduction in height H are evident.

To achieve the desired height reduction and elastic response results, one of the possible embodiments provides, independently of what is shown schematically in the attached drawings, that the first portion P1 can be defined by a number of first turns comprised between approximately 1 and approximately 5 at a first pitch comprised between approximately 9 mm and approximately 30 mm, that the second portion P2 can be defined by a number of second turns comprised between approximately 3 and approximately 8 at a second pitch comprised between approximately 25 mm and approximately 35 mm, and that the third portion P3 can be defined by a number of third turns comprised between approximately 1 and approximately 5 at a third pitch comprised between approximately 30 mm and approximately 70 mm.

In the advantageous embodiment shown in the attached drawings, the elastic unit 13 comprises a damping member 19 substantially consisting of a viscous dissipator 21, a stroke governor 25, as well as a positioning plate 22 and a slider plate 23.

The elastic unit 13 also comprises a central gas spring 20. The central gas spring 20 is disposed coaxial with the damping axis X and is constrained, on the side of a stem thereof, to the anchoring wall 14 and, on the side of a cylinder thereof, to the slider plate 23, and it allows to adjust the seat in height.

The viscous dissipator 21 and stroke limiter 25 are disposed laterally and substantially parallel with respect to the central gas spring 20 and are constrained, on the side of their stem, to the slider plate 23 and, on the side of their cylinder, to the base plate 16.

The positioning plate 22 is conformed to support the helical spring 18 at the lower part, and is mounted on the base plate 16 by means of a screw adjustment system 24 that allows it to be selectively adjusted in height, precisely with respect to the base plate 16, along the damping axis X. This adjustment allows, as explained, to give the helical spring 18 a desired preload in compression.

The slider plate 23 is disposed coaxially slideable within the central body 15 of the upper element 11 and defines the upper attachment of the helical spring 18, so that the latter is operatively disposed between the positioning plate 22 and the slider plate 23 itself.

This elastic-kinematic combination ensures that any compression or expansion of the helical spring 18 can be damped by the viscous dissipator 21, to the advantage of the comfort of the seat 51 to which the device 10 according to the present invention is applied.

It is clear that modifications and/or additions of parts may be made to the device 10 and to the seat 51 as described heretofore, without thereby departing from the field and scope of the present invention, as defined by the claims.

It is also clear that, although the present invention has been described with reference to some specific examples, a person of skill in the art will be able to achieve other equivalent forms of shock absorbing device for a seat, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Shock absorbing device (10) for a seat (51), comprising at least a first telescopic element (11) connectable to said seat (51), a second telescopic element (12) connectable to a rest plane of a vehicle and configured to slide axially with respect to said first telescopic element (11), and elastic means (13) disposed between said first telescopic element (11) and said second telescopic element (12), and configured to define a reciprocal elastic sliding between said first telescopic element (11) and said second telescopic element (12), **characterized in that** said elastic means (13) comprise at least a first portion (P1) having a first elastic coefficient (k1) and at least a second portion (P2) disposed in functional continuity with said first portion (P1) and having a second elastic coefficient (k2) different from said first elastic coefficient (k1).

2. Device (10) as in claim 1, **characterized in that** said elastic means (13) comprise a third portion (P3) disposed in functional continuity with said second portion (P2) and having a third elastic coefficient (k3) different from both said first elastic coefficient (k1) and also said second elastic coefficient (k2).

3. Device (10) as in claim 1, **characterized in that** said first elastic coefficient (k1) has a lower absolute value than said second elastic coefficient (k2).

4. Device (10) as in claim 2, **characterized in that** said second elastic coefficient (k2) has a lower absolute value than said third elastic coefficient (k3).

5. Device (10) as in one or other of the previous claims, **characterized in that** said elastic means (13) comprise at least one helical spring (18).

6. Device (10) as in claim 5, **characterized in that** said first portion (P1) comprises a number of first turns comprised between approximately 1 and approximately 5 at a first pitch comprised between approximately 9mm and approximately 30mm, and with a first elastic coefficient (k1) comprised between approximately 5N/mm and approximately 7N/mm **and in that** said second portion (P2) comprises a number of second turns comprised between approximately 3 and approximately 8 at a second pitch comprised between approximately 25mm and approximately 35mm, and with a second elastic coefficient (k2) comprised between approximately 7.5N/mm and approximately 15N/mm.

7. Device (10) as in claim 5 when referred to claims 2 and 4, **characterized in that** said third portion (P3) comprises a number of third turns comprised between approximately 1 and approximately 5 at a third pitch comprised between approximately 30mm and approximately 70mm, and with a third elastic coefficient (k3) comprised between approximately 10N/mm and approximately 40N/mm.

8. Device (10) as in one or the other of the previous claims from 5 onward, **characterized in that** said elastic means (13) comprise at least one damping member (19) provided with at least one viscous dissipator (21), disposed so as to define the assembly of said helical spring (18) both with said first telescopic element (11) and also with said second telescopic element (12), configured to dampen the elastic action of said helical spring (18) and limited in its stroke by a mechanical governor (25).

9. Device (10) as in claim 8, **characterized in that** said damping member (19) comprises at least one positioning plate (22) with which said helical spring (18) cooperates and configured to be selectively adjusted in height with respect to said second telescopic element (12).

10. Device (10) as in claim 8 or 9, **characterized in that** said elastic means (13) comprise a central gas spring (20) disposed coaxial with a damping axis (X), wherein said viscous dissipator (21) and said mechanical governor (25) are disposed laterally and substantially parallel with respect to said central gas spring (20).

11. Device (10) as in claim 10, **characterized in that** said central gas spring (20) is constrained, on the side of a stem thereof, to an anchoring wall (14) of said first telescopic element (11) and, on the side of a cylinder thereof, to a slider plate (23).

12. Device (10) as in claim 11, **characterized in that** said viscous dissipator (21) and said mechanical governor (25) are constrained, on the side of a stem thereof, to said slider plate (23) and, on the side of a cylinder thereof, to a base plate (16) of said second telescopic element (12).

13. Seat (51) installed on a vehicle, **characterized in that** it comprises or is associated with a shock absorbing device (10) as in any claim from 1 to 14.
